# EUROPÄISCHE PATENTSCHRIFT

(11) **EP 2 288 524 B1**
(45) Veröffentlichungstag und Bekanntmachung des Hinweises auf die Patenterteilung: **07.10.2015**
(21) Anmeldenummer: 09761540.5
(22) Anmeldetag: 20.04.2009
(51) Int. Cl.: B60T 8/1766, B60T 8/26, B60T 8/34, B60T 8/40, B60T 8/48

(54) **BREMSEINRICHTUNG FÜR EIN KRAFTFAHRZEUG MIT WENIGSTENS DREI BREMSKREISEN**
BRAKE DEVICE FOR A MOTOR VEHICLE COMPRISING AT LEAST THREE BRAKE CIRCUITS
DISPOSITIF DE FREINAGE POUR VÉHICULE À MOTEUR, CONSTITUÉ D'AU MOINS TROIS CIRCUITS DE FREINAGE

(30) Priorität: 11.06.2008 DE 102008002345
(43) Veröffentlichungstag der Anmeldung: 02.03.2011
(73) Patentinhaber: Robert Bosch GmbH, 70442 Stuttgart (DE)
(72) Erfinder: WUERTH, Gebhard, 74429 Sulzbach-Laufen (DE); MEHL, Volker, 76356 Weingarten (DE); KUNZ, Michael, 71711 Steinheim An Der Murr (DE); LEIBLEIN, Matthias, 70839 Gerlingen (DE); QUIRANT, Werner, 71717 Beilstein (DE)
(86) Internationale Anmeldenummer: PCT/EP2009/054663
(87) Internationale Veröffentlichungsnummer: WO 2009/149977

(56) Entgegenhaltungen:
- EP-A- 1 470 979
- DE-A1- 10 039 781
- DE-A1-102006 046 935
- US-A1- 2004 135 432

## Beschreibung

Die Erfindung liegt auf dem Gebiet von mehrkreisigen Bremsanlagen mit hydraulischen Bremskreisen für Kraftfahrzeuge.

Auf dem Gebiet des Kraftfahrzeugbaus sind seit langer Zeit hydraulische Bremsen wegen ihrer Effizienz und Funktionssicherheit üblich. Für eine die Funktionssicherheit noch weiter steigernde Redundanz sorgen dabei mehrkreisige Bremssysteme, bei denen oft mehrere hydraulische Bremskreise durch einen oder mehrere Hauptbremszylinder druckbeaufschlagt werden. Der Druck wird dabei zunächst durch Betätigung eines Bremspedals erzeugt und dann gegebenenfalls verstärkt. Vom Hauptbremszylinder aus werden, oft gesteuert durch Ventile, die Radbremsen druckbeaufschlagt und damit betätigt.

Es ist ebenfalls bekannt, die Bremsen eines Fahrzeugs durch zusätzliche Veraögerungselemente zu entlasten. Dabei kann beispielsweise eine Motorbremse eingesetzt werden, die durch die Ventilsteuerung auch gut dosierbar ist oder es können elektrische Einrichtungen eingesetzt werden, wie Wirbelstrombremsen oder Generatoren. Als Generatoren kommt üblicherweise die in jedem Fahrzeug vorhandene Lichtmaschine in Frage, die zum Aufladen der Starterbatterie und zur elektrischen Versorgung der Aggregate des Kraftfahrzeugs dient oder auch ein größer dimensionierter Antriebsmotor des Fahrzeugs, wie er in Hybridfahrzeugen vorhanden ist. Dieser Antriebsmotor kann generatorisch betrieben werden, um eine dem Fahrzeugantrieb dienende Batterie aufzuladen. Somit kann kinetische Energie des Fahrzeugs bei der Verzögerung gespeichert und später zur Beschleunigung des Fahrzeugs wieder verwendet werden. Der Vorgang der Bremsunterstützung unter Aufladung einer Batterie wird rekuperatives Bremsen genannt.

Bei derartigen Verzögerungsvorgängen eines Fahrzeugs stellen sich allerdings vielfältige Probleme. Der Fahrer möchte üblicherweise die Bremswirkung durch Betätigung des Bremspedals geeignet dosieren können, um den Bremsweg und das Maß der Bremsverzögerung für die jeweils vorliegende Verkehrssituation optimieren zu können. Er spürt gleichzeitig mit der erzielten Fahrzeugverzögerung die Gegenkraft im Bremspedal, so dass ihm ein iterativer Steuerungsprozess ermöglicht ist.

Tritt zu der direkten Bremswirkung der Bremskreise ein zusätzliches Verzögerungsaggregat in Form eines betriebenen Generators hinzu, so ist dessen Verzögerungswirkung einerseits für den Fahrer nicht optimal spürbar, andererseits ist die Verzögerungswirkung des Generators auch von vielen Randbedingungen abhängig und nicht zuletzt zeitlich veränderlich. Beispielsweise kann die Bremswirkung des Generators bei sich ändernder Fahrzeuggeschwindigkeit zu- oder abnehmen und beim Auskuppeln des Antriebsgetriebes fällt die Verzögerungswirkung zeitweise ganz weg, so dass sie nach dem Wiedereinkuppeln behutsam zugesteuert werden muss. Ein weiteres Problem ergibt sich, wenn die Batterie voll geladen ist, da dann die weitere erzeugte elektrische Leistung anderweitig abgeführt werden muss.

Die Kombination aus mechanischer Bremsung und zusätzlicher Verzögerung des Fahrzeugs durch andere Einflüsse ist damit für den Fahrer zwar handhabbar, jedoch unter Komfortgesichtspunkten nicht optimal steuerbar. Der Fahrer kann Änderungen der Fahrzeugverzögerung nur durch Ausgleich der Bremskräfte über das Bremspedal kompensieren.

Aus dem Stand der Technik ist eine Vielzahl von Verfahren bekannt, die den Fahrer bei der Steuerung von Bremsen unter Komfort- und Sicherheitsaspekten unterstützen sollen. Unter derartige Verfahren fallen sowohl die Schlupfregelung als auch das dynamische Kurvenbremsen zur Erhöhung der Fahrstabilität.

### STAND DER TECHNIK

So ist aus der DE 4128087 A1 ein Bremsdruckregelsystem für ein Fahrzeug bekannt, mit dem bei Kurvenbremsungen eine unterbremste Hinterachse verhindert wird. Der Bremsdruck an der Vorderachse wird dabei durch den Fahrer vorgegeben, der Bremsdruck an der Hinterachse in Abhängigkeit hiervon geregelt.

Es ist grundsätzlich auch bekannt, die Bremskraft derart zu verteilen, dass eine möglichst starke Abbremsung des Fahrzeugs unter Berücksichtigung der Kraftschlussausnutzung erreicht wird, wobei statisch und/oder dynamisch stärker belastete Räder auch entsprechend stärker bremsbelastet werden können.

Die Offenlegungsschrift DE 10 2006 046 935 A1 offenbart eine hydraulische Fahrzeugbremsanlage mit zwei Bremskreisen zum Anschluss eines Hauptbremszylinders an mehreren Radbremsen, mit einer in den beiden Bremskreise angeordneten Pumpe, die nach dem Rückförderprinzip arbeitet und mit mehreren in den beiden Bremskreisen angeordneten Druckmodulationsventiien zur Regelung des Bremsdrucks in den Radbremsen wenigstens einer Fahrzeugachse. Um den Bremsdruck unabhängig vom Fahrerwunsch stufenlos regulieren zu können, ist ein dritter Bremskreis zur Druckbeaufschlagung weiterer Radbremsen vorgesehen.

Die DE 100 39 781 A1 offenbart eine Bremsanlage für Fahrzeuge mit einem Differenzdruck-Bremskraftverstärker, der eine Arbeitskammer und eine Gegenkammer aufweist. Die Bremsanlage beinhaltet eine an eine der Kammern angeschlossenen Bremskraftverstärkerpumpe sowie eine hydraulischen Pumpe zum Betreiben von Systemen, die überlagert zu und/oder unabhängig von der über den Bremskraftverstärker übertragenden Bremsbetätigung durch den Fahrer mit Bremseneingriff arbeiten. Ebenso ist vorgesehen, dass ein elektrischer Antriebsmotor der Bremsanlage in seiner Drehrichtung umkehrbar ist und über in entgegengesetzte Drehrichtungen sperrende Freilaufkupplungen, mit der hydraulischen Pumpe einerseits und der als Druckpumpe arbeitenden Bremskraftverstärkerpumpe andererseits verbunden ist.

Aus der EP 0173954 B1 ist ein System bekannt, bei dem die Bremsdrücke für einzelne Bremsen mittels einer Bezugsmasse für das Fahrzeug und der durch den Fahrer vorgegebenen Sollverzögerung in einem abgespeicherten fahrzeugspezifischen Kennlinienfeld ermittelt werden. Die ermittelten Bremsdrücke werden in die Bremsen eingesteuert und bedarfsweise bei Abweichung der Fahrzeugverzögerung vom Sollwert nachgeregelt bis die Sollverzögerung erreicht ist.

Aus der DE 3313078 A1 ist eine Bremsdruckregeleinrichtung bekannt, die die Abnutzung verschiedener Radbremsen ermittelt und berücksichtigt, so dass ein gleichmäßiger Verschleiß der einzelnen Radbremsen auf Dauer erzielt wird.

Aus der DE 102005046606 ist eine Bremsanlage bekannt, bei der je ein Bremskreis einer der Achsen eines Fahrzeugs zugeordnet ist, so dass eine Antischlupfeinrichtung sowie eine Fahrdynamikregeleinrichtung ausschließlich in einem Bremskreis vorgesehen sein kann, wodurch der konstruktive Gesamtaufwand minimiert wird.

Schließlich ist aus der DE 10316090 A1 ein Bremssystem bekannt, mit mehreren Bremskreisen, die grundsätzlich hydraulisch wirken und auf Reibungsbremsen einzelner Räder einwirken, sowie mit einem Generator beziehungsweise einem Antriebselektromotor, der generatorisch betreibbar ist und zum Verzögern der einem Bremskreis zugeordneten Räder zusätzlich genutzt werden kann. Eine Steuereinrichtung ist vorgesehen, um die Bremskraftverteilung auf alle einzelnen Räder unter Berücksichtigung verschiedener fahrdynamischer Größen zu optimieren.

### VORTEILE DER ERFINDUNG

Vor dem Hintergrund des Standes der Technik liegt der Erfindung die Aufgabe zugrunde, eine Bremseinrichtung für ein Kraftfahrzeug zu schaffen, die auch komplexe brems- und fahrdynamische Regelvorgänge unterstützt, eine möglichst hohe Zuverlässigkeit aufweist und dabei konstruktiv möglichst einfach aufgebaut ist.

Die Aufgabe wird gemäß der Erfindung mit den Merkmalen der unabhängigen Ansprüche 1, 3 und gelöst.

Das beschriebene Bremssystem zeichnet sich dadurch aus, dass die direkt mittels der Bremsdruckerzeugungseinrichtung angesteuerte Gruppe von Bremskreisen wenigstens zwei getrennte hydraulische Bremskreise aufweist, so dass für eine ausreichende Redundanz und damit Funktionssicherheit beim Ausfall der elektrischen Systeme gesorgt ist.
Die Bremskreise der zweiten Gruppe sind ausschließlich mittels einer Hydraulikpumpe antreibbar und somit nicht unmittelbar durch ein Bremspedal mit einem Bremszylinder druckbeaufschlagbar.
Im Normalfall wird mittels einer Schätzung oder eines Sensors der Bremswunsch erfasst, beispielsweise durch einen Positionssensor oder Drucksensor am Bremspedal und ein entsprechendes Signal wird an die Steuerungseinrichtung abgegeben. Diese erfasst den Bremswunsch und kann zur Bestimmung der notwendigen Bremsbetätigung der Bremskreise der zweiten Gruppe aus dem gemessenen Weg des Bremspedals die eingestellte Bremswirkung der Bremskreise der ersten Gruppe bestimmen oder dies mittels eines Beschleunigungssensors ermitteln.

Es ergibt sich aus dem erfassten Bremswunsch und der tatsächlich erfolgenden Bremswirkung eine bestimmte Differenzbremswirkung, die durch die Räder erzeugt werden muss, die durch die Bremskreise der zweiten Gruppe angesteuert werden.

Die Steuereinrichtung berücksichtigt weiter die Verzögerungswirkung, die durch gegebenenfalls betriebene Wirkaggregate auf die entsprechenden Räder wirkt und subtrahiert diese Verzögerungswirkung von der mittels der Bremseinrichtung einzustellenden Bremswirkung. Im Ergebnis steuert die Steuereinrichtung entsprechende Ventile der zweiten Gruppe von Bremskreisen an, um mittels des entsprechend aufgebauten Hydraulikdrucks die Radbremsen zu betätigen. Insoweit lässt sich die Erfindung sowohl bei Standardfahrzeugen mit einem Verbrennungsmotor als auch bei Hybridfahrzeugen einsetzen, die über mehrere verschiedene Antriebssysteme verfügen.

Ändert sich die Verzögerungswirkung des oder von Wirkaggregaten allmählich oder schlagartig, so reagiert die Steuereinrichtung und verändert die Bremswirkung der Bremskreise der zweiten Gruppe Mit dem Ziel, die Gesamtbremswirkung vorteilhaft konstant zu halten.
Dabei wird die Steuereinrichtung durch verschiedene Sensoren unterstützt, die eine frühzeitige Prognose der sich ändernden Verzögerungswirkung eines Wirkaggregates erlauben.

Eine mögliche, vorteilhafte Ausgestaltung der Erfindung sieht vor, dass wenigstens eines der Räder, deren Radbremsen mit Bremskreisen der zweiten Gruppe oder auch der ersten Gruppe verbunden sind, zusätzlich mit einem Wirkaggregat verbunden ist, welches eine Verzögerung des jeweiligen Rades bewirkt.

Als Wirkaggregat dient dabei vorteilhaft ein Generator. Dieser kann die kinetische Energie in Elektrizität umwandeln, die entweder in einer Batterie gespeichert oder verbraucht werden kann. Damit können eventuell auftretende Wärmeprobleme bei der Dissipation der Verzögerungsenergie vermieden werden und die kinetische Energie des Fahrzeugs kann vorteilhaft zurück gewonnen werden.

Die Erfindung kann vorteilhaft dadurch ausgestaltet werden, dass der entsprechende Generator ein generatorisch betriebener elektrischer Antriebsmotor des Kraftfahrzeugs ist.

Dies ist im Falle von ausschließlich elektrisch betriebenen Fahrzeugen oder Hybridfahrzeugen, die sowohl einen elektrischen Antriebsmotor als auch einen Verbrennungsmotor aufweisen, möglich.

Durch eine entsprechende Ladesteuerung kann das Aufladen der Batterie gesteuert werden. Ist die Batterie gefüllt, so verringert sich die effektive Verzögerungsleistung des Generators. In diesem Fall kann es vorteilhaft sein, elektrische Verbraucher wie beispielsweise einen Heizwiderstand oder die Beleuchtung des Fahrzeugs an den Generator anzuschließen, um die elektrische Energie zu verbrauchen.

Eine derartige Steuerung des Wirkaggregats kann neben der Ansteuerung der hydraulischen Bremskreise ebenfalls von der Steuereinrichtung übernommen werden.

Die Steuerung ist dann vorteilhaft mit einem Batterieladungssensor und/oder einem Generatorleistungssensor verbunden, wodurch eine frühzeitige Prognose der Verzögerungsleistung des Generators ermöglicht wird. Damit kann die Steuereinrichtung rechtzeitig eingreifen, um ein Rucken des Fahrzeugs zu vermeiden.

Außer der Ausbalancierung zwischen der Verzögerungswirkung eines Wirkaggregates und der Bremswirkung unmittelbar durch eine hydraulische Bremse kann die Steuerungseinrichtung auch fahrdynamische Aufgaben wahrnehmen, indem beispielsweise beim Auftreten von Schlupf bei der Beschleunigung eine Radbremse automatisch angesprochen wird, um das Durchdrehen des entsprechenden Rades zu vermeiden, beim schnellen Durchfahren einer Kurve vor dem Verlust der Fahrstabilität entsprechend einseitig gebremst wird, um die Straßenlage des Fahrzeugs zu verbessern, oder indem durch die Steuereinrichtung die Kurvenfahrt mittels Abbremsung des kurveninneren Rades dynamisch unterstützt wird.

Eine weitere vorteilhafte Ausgestaltung der Erfindung sieht vor, dass je ein Bremskreis der ersten Gruppe mit einer Radbremse eines Vorderrades eines Kraftfahrzeuges verbunden ist.

Auf diese Weise ist sichergestellt, dass die Bremsen der Vorderräder unabhängig voneinander mit redundanten hydraulischen Bremskreisen angesprochen werden können und eine entsprechende Bremssicherheit erzielt wird. Entsprechende verzögernde Wirkaggregate werden dann bevorzugt mit Wirkung auf die Hinterräder des Kraftfahrzeugs eingesetzt, die mit einem oder mehreren Bremskreisen der zweiten Gruppe verbunden sind.

Dies bietet sich insbesondere dann an, wenn die Hinterachse angetrieben ist, sei es mittels eines Verbrennungsmotors oder eines Elektromotors oder wahlweise eines der beiden.

Besonders vorteilhaft kann es vorgesehen sein, dass die Steuereinrichtung mit Mitteln zur Beeinflussung der Bremskraftverteilung auf die Bremskreise der ersten Gruppe verbunden ist.

In diesem Fall kann die Steuereinrichtung alle notwendigen fahrdynamischen Regelungen bei der Ansteuerung einzelner Radbremsen oder Gruppen von Radbremsen und bei der Verteilung der Bremskraft übernehmen.

Es ist erfindungsgemäß zur Erhöhung des Fahrkomforts vorgesehen, dass die den Bremskreisen der ersten Gruppe zugeordneten Hydraulikpumpen mechanisch von dem Pumpenantrieb abkoppelbar sind, insbesondere durch eine durch die Drehrichtung der Pumpenantriebswelle steuerbare Freilaufkupplung.

Damit wird die Hydraulikpumpe oder werden die Hydraulikpumpen der ersten Gruppe von Bremskreisen in dem Fall, wenn sie nicht zur Erzielung einer Verzögerungswirkung des Fahrzeugs benötigt werden, das heißt beispielsweise bei Teilbremsungen im Falle von Fahrdynamikregelungen von dem Pumpenantrieb abgekoppelt. In diesem Zustand wird nur noch die Hydraulikpumpe oder eine Gruppe von Hydraulikpumpen angetrieben, die die Bremskreise der zweiten Gruppe mit Druck versorgen. Damit stehen der Steuereinrichtung die Möglichkeiten zur Verfügung, die durch diese Bremskreise angesprochenen Radbremsen mit Druck zu beaufschlagen. Gleichzeitig sind die Hydraulikpumpen der ersten Gruppe von Bremskreisen abgekoppelt, so dass keine den Fahrkomfort störende Wirkung der Pumpen wie beispielsweise das Pumpenpulsieren auftritt, das den Fahrer, wenn eine Betätigung des Bremspedals notwendig würde, stören könnte Erfindungsgemäß ist auch vorgesehen,
dass die den Bremskreisen der ersten Gruppe zugeordneten Hydraulikpumpen über Ventile ansaugseitig mit dem jeweiligen Druckausgang verbindbar und insbesondere über federbelastete Rückschlagventile mit der Hochdruckseite des jeweiligen Bremskreises verbunden sind.

In diesem Fall ist durch die entsprechende Leitungsführung der Hydraulikleitungen und die Steuerung der Ventile sichergestellt, dass die Hydraulikpumpen der ersten Gruppe von Bremskreisen keinen Druck aufbauen. Sie bewegen die Hydraulikflüssigkeit in einem Leerlaufkreis.

Die Erfindung bezieht sich außer auf eine oben beschriebene Bremseinrichtung auch auf ein Verfahren zum Betrieb einer solchen Bremseinrichtung, bei dem die Bremskreise der zweiten Gruppe und gegebenenfalls die Wirkung der Wirkaggregate in Abhängigkeit vom Bremswunsch und von der tatsächlich durch die erste Gruppe von Bremskreisen erzielten Bremswirkung gesteuert werden.

### ZEICHNUNGEN

Im Folgenden wird die Erfindung anhand eines Ausführungsbeispiels in einer Zeichnung gezeigt und anschließend beschrieben:

Dabei zeigt
Figur 1 den hydraulischen Leitungsplan einer erfindungsgemäßen Bremseinrichtung mit drei hydraulischen Bremskreisen;
Figur 2 die Funktion einer mechanischen Entkoppelungseinrichtung für Hydraulikpumpen;
Figur 3 eine hydraulische Entkoppelungseinrichtung zur Entkoppelung von Hydraulikpumpen von Bremskreisen.

### BESCHREIBUNG DER AUSFÜHRUNGSBEISPIELE

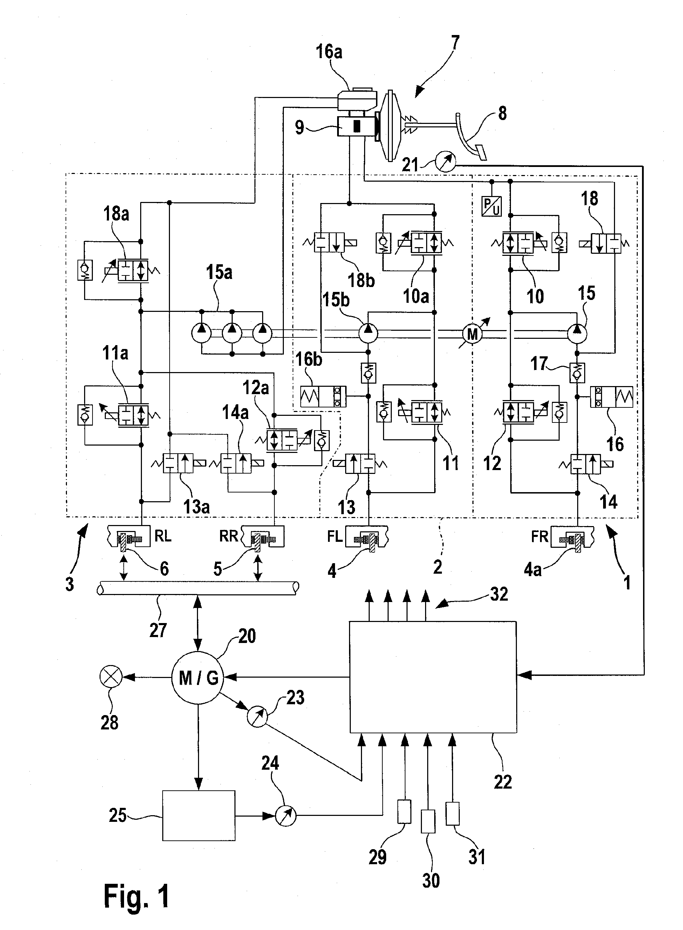

Die in der Figur 1 dargestellte Bremseinrichtung gleicht in einzelnen Teilen einem bekannten Standardmodulationssystem mit aktivem Druckaufbau. Die Vorderachse mit dem linken Vorderrad 4 und dem rechten Vorderrad 4a ist mit zwei getrennten Bremskreisen ausgestattet, dem ersten Bremskreis 1 und dem zweiten Bremskreis 2, von denen jeder ein vollständiges modulationsfähiges Bremssystem darstellt. Der dritte Bremskreis 3 ist ebenso wie der erste und der zweite Bremskreis 1, 2 hydraulisch ausgebildet und versorgt gemeinsam die beiden Hinterradbremsen der Räder 5, 6. Die einzelnen Bremskreise sind durch gestrichelte Linien angedeutet. Es ist ein gemeinsamer Pumpenantrieb M für die hydraulischen Pumpen 15, 15a, 15b aller drei Bremskreise vorgesehen, so dass in jedem Bremskreis einzeln für sich ein aktiver Druckaufbau erfolgen kann. Individuelle Bremswirkungen auf einzelne Räder können entweder durch individuelle Steuerung der Bremskreise 1, 2 der ersten Gruppe oder individuelle Ansteuerung der Radbremsen des Bremskreises 3 der zweiten Gruppe erfolgen.

Die Hydraulikpumpe, die der Vorderachse zugeordnet ist, kann pro Radbremse als Einkolbenpumpe 15,15b ausgeführt sein, während die den dritten Bremskreis 3 versorgende Hydraulikpumpe 15a als Dreikolbenpumpe ausgebildet sein kann. Andere Pumpenkonfigurationen mit anderen Kolbenzahlen oder auch Pumpen, die nach anderen Prinzipien arbeiten wie zum Beispiel Zahnradpumpen, sind ebenfalls denkbar. Der Hauptbremszylinder 9 der Bremsbetätigungseinrichtung 7 ist mit dem dritten Bremskreis 3 nicht verbunden. Im elektrischen Fehlerfall werden deshalb nur die Bremskreise 1, 2, die den Vorderradbremsen zugeordnet sind, angesprochen, was aber wegen der Redundanz und der zur Verfügung stehenden Bremskraftverstärkung ausreicht.

Im ungebremsten Fall sind alle Ventile stromlos. Das Druckregelventil 18a des dritten Bremskreises 3 ist dann offen, so dass von den Radbremszylindern der Hinterräder 5, 6 zu dem drucklosen Reservoir 16a ein Ausgleich erfolgen kann. Im teilgebremsten Fall werden die Bremskreise 1, 2 normal hydraulisch betätigt, während der dritte Bremskreis über die Steuereinrichtung 22, die den Bremswunsch durch einen Sensor 21 abgreift, mittels der Steuerausgänge 32 über das Druckregelventil 18a sowie die Druckaufbauventile 11a, 12a und die Druckabbauventile 13a, 14a gesteuert wird. Das Druckregelventil 18a kann vorteilhaft als stetig stellbares Druckregelventil ausgebildet sein, das mittels einer vorgegebenen Druckdifferenz gesteuert wird. Es kann aber auch vorgesehen sein, dass ein absoluter Druck angesteuert wird. Hierzu ist jedoch notwendig, entsprechende Drucksensoren im Hochdruckteil des dritten Bremskreises 3 vorzusehen. Dieser beziehungsweise diese Sensoren können beispielsweise in der Nähe der Radbremszylinder angeordnet sein.

Die vorliegende Erfindung macht einen Hochdruckspeicher für den nicht direkt hydraulisch angesprochenen Bremskreis 3 überflüssig, ohne auf die notwendige Redundanz zu verzichten. Diese ist durch einen mehrkreisigen Aufbau der Vorderradbremseinrichtung gegeben. Auch die Steuerbarkeit einzelner Radbremsen ist, sowohl an den Vorderrädern durch unterschiedliches Ansprechen der Einzelbremskreise als auch an den Hinterrädern durch entsprechende Steuerung mittels der Steuereinrichtung 22 realisierbar.

Die Figur 1 zeigt ein mehrkreisiges Bremssystem mit einem ersten Bremskreis 1, der ebenso aufgebaut ist, wie der zweite Bremskreis 2 auf der rechten Seite der Figur und einen dritten Bremskreis 3, der den einzigen Bremskreis der zweiten Gruppe von Bremskreisen bei dem dargestellten Ausführungsbeispiel bildet.

Im Folgenden wird zunächst die Funktion des ersten Bremskreises 1 beschrieben, danach die Besonderheit des dritten Bremskreises 3.

Die Figur 1 zeigt einen ersten Bremskreis 1 auf der rechten Seite, der einem Vorderrad 4a, eines zweiachsigen Kraftfahrzeuges zugeordnet ist sowie einen zweiten Bremskreis 2, der einem Vorderrad 4 des Kraftfahrzeuges zugeordnet ist. Die Bremskreise sind jeweils durch strichpunktierte Linien angedeutet. In dem konkreten Fall, dass das Kraftfahrzeug nur drei Bremskreise aufweist, bilden die ersten beiden Bremskreise die erste Gruppe von Bremskreisen, die unmittelbar hydraulisch betätigbar sind, während der dritte Bremskreis die zweite Gruppe von Bremskreisen bildet, die mit einer hydraulischen Bremsbetätigungseinrichtung 7 nicht verbunden, sind.

Die hydraulische Bremsbetätigungseinrichtung 7 weist ein Bremspedal 8 sowie einen Doppel-Hauptbremszylinder 9 auf, in dem ein Hydraulikdruck zum Betätigen der Bremseinrichtung beim Treten des Bremspedals 8 aufgebaut wird.

Zunächst soll anhand des ersten Bremskreises 1 die Grundfunktion eines derartigen Moduls beispielhaft erläutert werden.

Wird das Bremspedal 8 betätigt, so steht ein erhöhter Bremsdruck in dem Hauptbremszylinder 9 an. Dieser wird über das sogenannte Umschaltventil 10, dessen weitere Funktion weiter unten noch erläutert wird, zu dem Druckaufbauventil 12 geleitet, das dem Rad 4a zugeordnet ist.

Grundsätzlich leiten die Druckaufbauventile 11, 12 den erhöhten Hydraulikdruck an die Bremszylinder der Räder 4, 4a weiter, so dass die entsprechenden Reibungsbremsen beispielsweise in Form von Scheibenbremsen betätigt werden. Das Entbremsen geschieht, wenn das Bremspedal gelöst wird, ebenfalls über die Ventile 11, 12. Beim selbständigen Entbremsen während der Betätigung des Bremspedals, beispielsweise beim Eingreifen einer ABS- Steuerung, wird wenigstens eines der Druckabsenkventile 13, 14 geöffnet, der Hydraulikdruck in dem entsprechenden Radbremszylinder abgesenkt und die Hydraulikflüssigkeit zur Ansaugseite der Hydraulikpumpe 15, 15b abgeführt. Auf der Ansaugseite der Hydraulikpumpe 15, 15b ist zudem ein Hydraulikspeicher 16, 16b zum Volumenausgleich für die Hydraulikflüssigkeit vorgesehen. Ein Rückschlagventil 17 sorgt dafür, dass von der Ansaugseite der Hydraulikpumpe aus keine Hydraulikflüssigkeit zu den Druckabsenkventilen 13, 14 beziehungsweise zum Speicher 16 fließen kann.

Üblicherweise ist eine Blockierschutzvorrichtung für die einzelnen Räder vorgesehen, die ein Blockieren der Räder bei zu starkem Bremsen verhindert. Es sind dazu beispielsweise nicht dargestellte Drehzahlfühler an den Rädern 4, 4a vorgesehen, die beim Blockieren eines Rades ein Signal an eine Steuereinrichtung 22 abgeben. Darauf wird das dem Rad zugeordnete Bremsdruckaufbauventil 11, 12 geschlossen und gleichzeitig das zugehörige Bremsdruckabsenkventil 13,14 geöffnet, um die Blockade des Rades aufzuheben. Gleichzeitig wird die Hydraulikpumpe 15, 15b angetrieben, um die an ihrer Ansaugseite ankommende Hydraulikflüssigkeit wieder auf die Primärseite des Bremskreises zu pumpen.

Dreht sich das entsprechende Rad wieder, so kann mittels Öffnung des Bremsdruckaufbauventils 11, 12 der Druck und damit die Bremswirkung wieder erhöht werden, so lange bis wieder eine Blockade droht. Dieser iterative Prozess benötigt auf der Primärseite des Bremskreises Hydraulikflüssigkeit unter hohem Druck, die aus dem Hauptbremszylinder durch die Bremsbetätigung des Fahrers bereitgestellt wird. Die Hydraulikpumpe 15, 15b leert den Hydraulikspeicher 16 und sorgt dafür, dass die Hydraulikflüssigkeit rückgefördert wird.

Der beschriebene Vorgang kann in ähnlicher Form auch dann durchgeführt werden, wenn beim Anfahren des Fahrzeugs an einem Rad oder an mehreren Rädern Schlupf droht oder wenn eine Radbremse zum Zweck einer Fahrdynamikregelung betätigt wird, ohne dass im Hauptbremszylinder Bremsdruck ansteht. In beiden Fällen kann der benötigte Druck zur Betätigung des Radbremszylinders durch die Hydraulikpumpe 15, 15b geliefert werden.

In diesem Fall werden die Umschaltventile 10,10a ebenso wie die Hydraulikpumpen 15,15b angesteuert.

Gleichzeitig wird das sogenannte Ansaugventil 18, 18b geöffnet, so dass Hydraulikflüssigkeit aus dem Bereich des Hauptbremszylinders zur Ansaugseite der Hydraulikpumpe 15, 15b gelangen kann.

Die Funktion des dritten Bremskreises 3 auf der linken Seite der Figur 1 ist grundsätzlich ebenso wie die des ersten Bremskreises 1, mit der Ausnahme, dass der dritte Bremskreis 3 vom Hauptbremszylinder 9 vollständig abgekoppelt ist. Bei der Beschreibung der Funktionsweise des dritten Bremskreises sind folgende Zustände zu unterscheiden:
1. Beim verzögerungsfreien Lauf des Kraftfahrzeugs wird weder eine Radbremse eines Rades 5, 6 betätigt noch zur Verzögerung ein Wirkaggregat 20, beispielsweise in Form eines generatorisch betriebenen Antriebselektromotors, genutzt.
2. Im Falle einer Teilbremsung findet bevorzugt rekuperatives Bremsen statt, das heißt es wirkt ein bekanntes Bremsmoment durch das Wirkaggregat 20 auf die Räder 5, 6. Der Verzögerungswunsch, der vom Fahrer durch Betätigen des Bremspedals 8 geäußert wird, kann mittels Sensoren 21 oder durch Schätzung aufgenommen und an die Steuereinrichtung 22 weitergegeben werden. Dieser ist das Verzögerungsmoment des Wirkaggregats 20 bekannt oder dies wird mittels eines Leistungssensors 23 gemessen und übermittelt. Alternativ oder zusätzlich kann auch mittels eines Ladungssensors 24 der Ladezustand einer Batterie 25, die durch das Wirkaggregat geladen wird, erfasst und an die Steuereinrichtung 22 gegeben werden, um den Lastzustand des Wirkaggregats 20 festzustellen.

Unter Berücksichtigung des Bremswunsches, der tatsächlich durch die ersten Bremskreise 1,2 auf hydraulischem Wege erzielten Verzögerungswirkung und des bekannten Verzögerungsmoments des Wirkaggregats 20 berechnet die Steuereinrichtung 22 die durch den dritten Bremskreis zu erzielende Bremsverzögerung und stellt diese primär durch Ansteuerung des Umschaltventils 18a, das als Druckdifferenzsteuerungsventil arbeitet, ein. Dies ist durch Modulation des Umschaltventils 18a bei gegebenenfalls laufender Hydraulikpumpe 15a möglich. Der so erzeugte und eingestellte Hydraulikdruck wird an die Bremsdruckaufbauventile 11a, 12a übermittelt, die den Druck an die Radbremszylinder der Räder 5, 6 weitergeben. Das Entbremsen erfolgt bei üblichen Teilbremsvorgängen vorteilhaft über das Ventil 18a und die Ventile 11a, 12a. Beim radindividuellen Druckabbau, zum Beispiel bei ABS- Einsteuerung erfolgt die Entbremsung über die Ventile 13a oder 14a.

Die notwendige Betätigung des dritten Bremskreises 3 wird durch die zusätzliche Verzögerungswirkung des Wirkaggregates 20 über die Antriebswelle 27 auf die Räder 5, 6 grundsätzlich vermindert und es wird entsprechend Energie über das Wirkaggregat zurück gewonnen und beispielsweise in der Batterie 25 gespeichert.

In den Fällen, in denen das Verzögerungsmoment des Wirkaggregats 20 schwankt, also beispielsweise, wenn die Batterie 25 voll ist, das Fahrzeug sich verlangsamt oder der Antriebsstrang durch einen Getriebeschaltvorgang von den Rädern abgekoppelt wird, muss, um die Gesamtverzögerung konstant zu halten, durch die Steuereinrichtung 22 entsprechend entweder, soweit möglich, das Verzögerungsmoment des Wirkaggregats erhöht werden, beispielsweise durch Zuschalten eines elektrischen Verbrauchers 28 und/oder es muss die Ansteuerung des dritten Bremskreises 3 so geändert werden, dass die veränderte Bremskraft das geänderte Verzögerungsmoment des Wirkaggregats 20 ausgleicht.
Dies ist bei der erfindungsgemäßen Bremseinrichtung wesentlich einfacher möglich als bei herkömmlichen Bremseinrichtungen, da einerseits durch die direkte Betätigung der ersten Bremskreise 1,2 die dort erzielte Bremswirkung konstant bleibt und vom Fahrer gut steuerbar ist und andererseits der Ausgleich von Bremswirkungen durch die Steuereinrichtung 22 zwischen den beiden unabhängigen Teilbremseinrichtungen 3, 20 relativ einfach und stetig zu realisieren ist.

Im Bereich der Steuereinrichtung 22 sind in der Figur 1 zudem noch Sensoren 29 (Querbeschleunigungssensor), 30 (Schlupfsensor) und 31 ( Fahrgeschwindigkeitssensor) dargestellt. Außerdem kann ein Fahrtrichtungssensor vorgesehen sein, der der Steuereinrichtung 22 hilft, zwischen Vorwärtsfahrt und Rückwärtsfahrt zu unterscheiden, so dass bei Rückwärtsfahrt die Bremsen der Hinterachse stärker belastet werden können.

Zudem kann die Steuereinrichtung 22 mit Drehzahlfühlern an den Rädern 5, 6 verbunden sein, sowie mit einem Sensor, der die Betätigung der Getriebekupplung anzeigt.

Die entsprechenden Ausgänge 32 sind mit den steuerbaren Ventilen der Bremskreise verbunden.

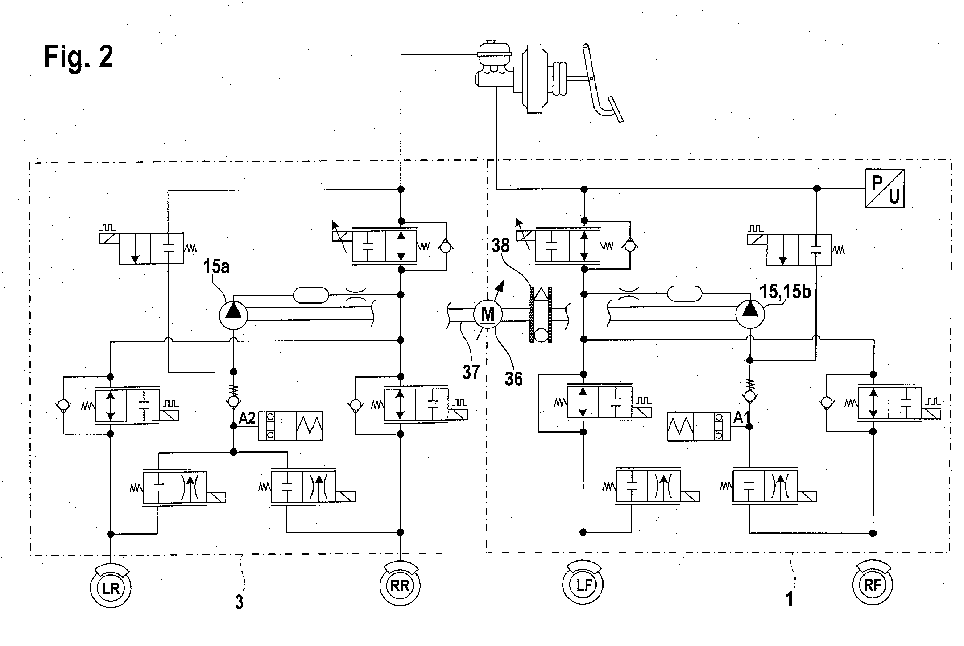

In der Figur 2 ist die Struktur und Funktionsweise der Steuereinrichtung 22 der Übersichtlichkeit halber weggelassen. Sie ist grundsätzlich jedoch mit der in der Figur 1 dargestellten vergleichbar. Gleiche Teile sind mit gleichen Bezugszeichen versehen.

In der Figur 2 ist eine Bremseinrichtung dargestellt, die in großen Teilen der in Figur 1 dargestellten entspricht, wobei der Einfachheit halber im rechten Teil der Figur ein einzelner, zwei Räder umfassender Bremskreis anstelle der den einzelnen Vorderrädern zugeordneten ersten und zweiten Bremskreise gezeigt ist Es ist dort jedoch beispielhaft eine auf die Erfindung anwendbare Einrichtung dargestellt, die den Komfort dadurch erhöht, dass eine jeweils nicht benötigte Hydraulikpumpe 15,die für die Hydraulikpumpen 15 und 15b aus der Figur 1 steht, dann, wenn sie nicht benötigt wird, vom Antriebsstrang des Pumpenantriebsmotors 36 abgekoppelt wird. Dies geschieht dadurch, dass der Antriebsmotor 36 grundsätzlich in beiden Drehrichtungen die entsprechende Antriebswelle 37 treiben kann und dass die Hydraulikpumpe 15a eines weiteren Bremskreises 3 unabhängig von der Drehrichtung der Welle 37 einen Hydraulikdruck erzeugen kann. Auf der Welle 37 ist zwischen dem Antriebsmotor 36 und der Hydraulikpumpe 15 eine mechanische Freilaufeinrichtung 38 gebildet, die dafür sorgt, dass die Hydraulikpumpe 15 des ersten Bremskreises nur in einer Drehrichtung der Welle 37 angetrieben wird, in der entgegen gesetzten Laufrichtung jedoch nicht.

Damit wird verhindert, dass, wenn im dritten Bremskreis 3 Druck mittels der Hydraulikpumpe 15a aufgebaut wird, die Pumpen des ersten und zweiten Bremskreises mitlaufen und ungewollte Pulsationen erzeugen, die der Fahrer bei einer eventuellen Betätigung des Bremspedals spüren würde. Dies kann z.B beim Teilbremsen der Fall sein.

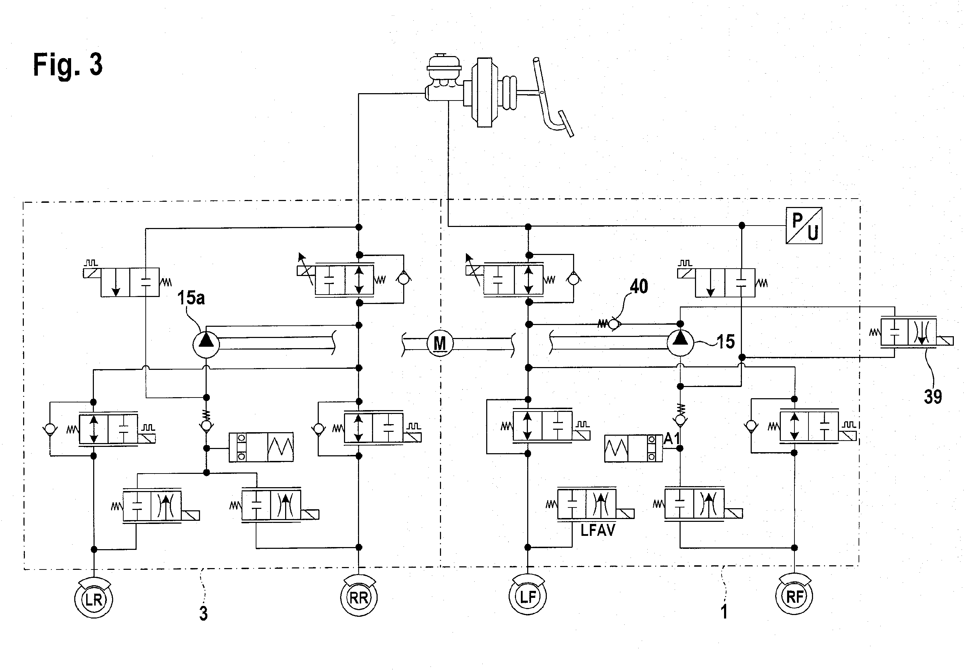

In der Figur 3 ist eine Bremseinrichtung ähnlich der in der Figur 2 dargestellten gezeigt, wobei der Einfachheit halber im rechten Teil der Figur wieder ein einzelner, zwei Räder umfassender Bremskreis anstelle der in der Figur 1 den einzelnen Vorderrädern zugeordneten ersten und zweiten Bremskreise gezeigt ist. Die Aufgabe der Entkopplung der Hydraulikdruckerzeugung des ersten/zweiten Bremskreises 1/2 von der Hydraulikdruckerzeugung in dem dritten Bremskreis 3 wird hier nicht durch einen mechanischen Freilauf der Antriebswelle der Hydraulikpumpen gelöst, sondern dadurch, dass die Hydraulikpumpe 15des ersten Bremskreises 1, die wieder stellvertretend für die Hydraulikpumpen 15,15 b des ersten und zweiten Brmskreises steht, zwar gleichzeitig mit der Hydraulikpumpe 15a des weiteren Bremskreises 3 betrieben, jedoch im Entkopplungsfall die Ausgangsseite der Hydraulikpumpen 15/15b jeweils über ein Schaltventil 39, das in diesem Fall geöffnet wird, mit der Ansaugseite jeweils derselben Hydraulikpumpe 15,15b verbunden wird, so dass die jeweilige Pumpe Hydraulikflüssigkeit im Kreis fördert. Dadurch ist ein Leerlauf der Hydraulikpumpen 15,15b gewährleistet, so dass Pulsationen vermieden werden.

Die Hydraulikpumpen 15,15b sind über je ein federbelastetes Rückschlagventil 40 mit der Hochdruckseite des ersten/zweiten Bremskreises 1/2 verbunden, um etwa auftretende Pulsationen der Hydraulikpumpe 15/15b abzufedern beziehungsweise Druckspitzen über die Primärseite des jeweiligen Bremskreises 1 abzubauen.

Die erfindungsgemäße Bremseinrichtung erlaubt somit eine komfortable Nutzung von Rekuperationsbremsvorgängen, wobei Schwankungen innerhalb eines Teilsystems der Bremseinrichtung abgefangen und ausgeglichen werden können und somit für den Fahrer beziehungsweise Insassen des Fahrzeugs unmerklich bleiben. Zudem ist ein weiteres Teilsystem der Bremseinrichtung vorgesehen, das von den Ausgleichsvorgängen unbeeinflusst bleibt und konventionell funktioniert. Eine kompetente Steuereinrichtung steuert in geeigneter Weise alle auftretenden Brems- und Verzögerungswirkungen. Dadurch, dass die Steuereinrichtung 22 auf Schwankungen der Verzögerungswirkung des Wirkaggregats 20 reagieren kann, ist eine stetige Verblendung mit der Bremswirkung des dritten Bremskreises 3 möglich, wodurch ein ruckfreies Bremsen in komfortabler Weise ermöglicht ist.

## Patentansprüche

1. Bremseinrichtung für ein Kraftfahrzeug mit einer ersten Gruppe von wenigstens zwei hydraulischen Bremskreisen (1,2), die mit einer manuell oder mittels eines Pedals (8) betätigbaren Bremsdruckerzeugungseinrichtung (7) verbunden sind und deren Wirkung auf Radbremsen durch Ventile (10,10a,11,12,13,14) steuerbar ist und mit einer zweiten Gruppe von Bremskreisen mit wenigstens einem hydraulischen Bremskreis (3), der dauerhaft hydraulisch von der Bremsdruckerzeugungseinrichtung (7) entkoppelt und ausschließlich mittels einer automatischen Steuerungseinrichtung (22) gesteuert ist,
wobei die Bremskreise (1,2) der ersten Gruppe und die Bremskreise (3) der zweiten Gruppe wenigstens eine Hydraulikpumpe (15,15a,15b) aufweisen, wobei die Hydraulikpumpen mit einem gemeinsamen Pumpenantrieb (36) kinematisch verbunden sind **dadurch gekennzeichnet, dass** die den Bremskreisen (1,2) der ersten Gruppe zugeordneten Hydraulikpumpen (15,15b) über Ventile (39) ansaugseitig mit den jeweiligen Hochdruckausgang zur Entkopplung der Hydraulikdruckerzeugung in den Bremskreisen (1,2) der ersten Gruppe von der Hydraulikdruckerzeugung in dem hydraulischen Bremskreis (3) der zweiten Gruppe, verbindbar sind,
wobei die der ersten Gruppe zugeordneten Hydraulikpumpen (15,15b) sich im Leerlauf befinden.

2. Bremseinrichtung nach Anspruch 1, **dadurch gekennzeichnet, dass** die Hydraulikpumpen der Bremskreise der ersten Gruppe (1,2) über federbelastete Rückschlagventile (40) mit der Hochdruckseite des jeweiligen Bremskreises verbindbar sind.

3. Bremseinrichtung für ein Kraftfahrzeug mit einer ersten Gruppe von wenigstens zwei hydraulischen Bremskreisen (1,2), die mit einer manuell oder mittels eines Pedals (8) betätigbaren Bremsdruckerzeugungseinrichtung (7) verbunden sind und deren Wirkung auf Radbremsen durch Ventile (10,10a,11,12,13,14) steuerbar ist und mit einer zweiten Gruppe von Bremskreisen mit wenigstens einem hydraulischen Bremskreis (3), der dauerhaft hydraulisch von der Bremsdruckerzeugungseinrichtung (7) entkoppelt und ausschließlich mittels einer automatischen Steuerungseinrichtung (22) gesteuert ist, wobei sowohl die Bremskreisen (1,2) der ersten Gruppe als auch die Bremskreise (3) der zweiten Gruppe wenigstens eine Hydraulikpumpe (15,15a,15b) aufweisen, wobei die Hydraulikpumpen mit einem gemeinsamen Pumpenantrieb (36) kinematisch verbunden sind, **dadurch gekennzeichnet, dass** die den Bremskreisen (1,2) der ersten Gruppe zugeordneten Hydraulikpumpen (15,15b), zur Entkopplung der Hydraulikdruckerzeugung in den Bremskreise (1,2) der ersten Gruppe von der Hydraulikdruckerzeugung in dem hydraulischen Bremskreis (3) der zweiten Gruppe, mechanisch von dem Pumpenantrieb (36) abkoppelbar sind, insbesondere durch eine durch die Drehrichtung der Pumpenantriebswelle steuerbare Freilaufkupplung (38).

4. Bremseinrichtung nach Anspruch 1 oder 3, **dadurch gekennzeichnet, dass** wenigstens eines der Räder (5,6), deren Radbremsen mit Bremskreisen (3) der zweiten Gruppe verbunden sind, zusätzlich mit einem Wirkaggregat (20) verbunden ist, welches eine Verzögerung des jeweiligen Rades bewirkt.

5. Bremseinrichtung nach Anspruch 4, **dadurch gekennzeichnet, dass** das Wirkaggregat (20) ein elektrischer Generator ist.

6. Bremseinrichtung nach Anspruch 5, **dadurch gekennzeichnet, dass** der Generator ein generatorisch betriebener elektrischer Antriebsmotor des Kraftfahrzeuges ist.

7. Bremseinrichtung nach Anspruch 5 oder 6,
**dadurch gekennzeichnet, dass** der Generator mit einer Batterie (25) verbunden ist.

8. Bremseinrichtung nach Anspruch 5, 6 oder 7,
**dadurch gekennzeichnet, dass** der Generator mit einem elektrischen Verbraucher (28) verbindbar ist.

9. Bremseinrichtung nach Anspruch 1 oder einem der folgenden,
**dadurch gekennzeichnet, dass** die Steuereinrichtung (22) mit wenigstens einem Sensor der folgenden Sensorarten verbunden ist:
Querbeschleunigungssensor (29),
Schlupfsensor (30),
Fahrgeschwindigkeitssensor (31),
Fahrtrichtungssensor,
Lenkwunschsensor.

10. Bremseinrichtung nach Anspruch 5 oder einem der folgenden,
**dadurch gekennzeichnet, dass** die Steuereinrichtung (22) mit wenigstens einem Sensor der folgenden Sensorarten verbunden
ist:
Batterieladungssensor (24),
Generatorleistungssensor (23).

11. Bremseinrichtung nach Anspruch 1 oder einem der folgenden,
**dadurch gekennzeichnet, dass** je ein Bremskreis der ersten Gruppe mit einer Radbremse eines Vorderrades eines Kraftfahrzeuges verbunden ist.

12. Bremseinrichtung nach Anspruch 1 oder einem der folgenden, **dadurch gekennzeichnet, dass** ein Bremskreis (3) der zweiten Gruppe mit beiden Radbremsen zweier Hinterräder (5,6) eines Kraftfahrzeuges verbunden ist.

13. Bremseinrichtung nach Anspruch 12, **dadurch gekennzeichnet, dass** der Bremskreis (3) der zweiten Gruppe auf eine Hinterachse (27) wirkt, die durch einen Motor angetrieben ist.

14. Bremseinrichtung nach Anspruch 1 oder einem der folgenden,
**dadurch gekennzeichnet, dass** die Steuereinrichtung (22) mit Mitteln (10,10a,11,12,13,14) zur Beeinflussung der Bremskraftverteilung auf die Bremskreise (1,2) der ersten Gruppe verbunden ist.

15. Bremseinrichtung nach Anspruch 3, **dadurch gekennzeichnet, dass** die Hydraulikpumpe (15a) des hydraulischen Bremskreises (3) der zweiten Gruppe unabhängig von der Drehrichtung Hydraulikdruck erzeugen kann und dass die Hydraulikpurnpe (15, 15a) des Bremskreises der ersten Gruppe nur in einer Drehrichtung angetrieben wird.

16. Verfahren zum Betrieb einer Bremseinrichtung nach einem der vorangegangenen Patentansprüche, bei dem die hydraulischen Bremskreise (1,2) der ersten Gruppe unmittelbar mittels einer Bremskrafterzeugungseinrichtung (7) beaufschlagt werden, der Bremswunsch mittels eines Sensors (21) ermittelt wird, und die Steuereinrichtung (22) die Bremskreise (3) der zweiten Gruppe unter Berücksichtigung der wirkenden Verzögerung eines Wirkaggregates (20) zur Erzielung einer angestrebten Gesamtbremswirkung ansteuert.

## Claims

1. Brake device for a motor vehicle having a first group of at least two hydraulic brake circuits (1, 2) which are connected to a brake pressure-generating device (7) which can be activated manually or by means of a pedal (8), and the effect of which on wheel brakes can be controlled by valves (10, 10a, 11, 12, 13, 14), and having a second group of brake circuits having at least one hydraulic brake circuit (3) which is permanently hydraulically decoupled from the brake pressure-generating device (7) and is controlled exclusively by means of an automatic control device (22),
wherein the brake circuits (1, 2) of the first group and the brake circuits (3) of the second group have at least one hydraulic pump (15, 15a, 15b), wherein the hydraulic pumps are kinematically connected to a common pump drive (36), **characterized in that** the hydraulic pumps (15, 15b) which are assigned to the brake circuits (1, 2) of the first group can be connected via valves (39) on the intake side to the respective high pressure outputs in order to decouple the hydraulic pressure generation in the brake circuits (1, 2) of the first group from the hydraulic pressure generation in the hydraulic brake circuit (3) of the second group, wherein the hydraulic pumps (15, 15b) which are assigned to the first group are in the idle state.

2. Brake device according to Claim 1, **characterized in that** the hydraulic pumps of the brake circuits of the first group (1, 2) can be connected via springloaded non-return valves (40) to the high pressure side of the respective brake circuit.

3. Brake device for a motor vehicle having a first group of at least two hydraulic brake circuits (1, 2) which are connected to a brake pressure-generating device (7) which can be activated manually or by means of a pedal (8) and the effect of which on wheel brakes can be controlled by valves (10, 10a, 11, 12, 13, 14), and having a second group of brake circuits having at least one hydraulic brake circuit (3) which is permanently hydraulically decoupled from the brake pressure-generating device (7) and controlled exclusively by means of an automatic control device (22), wherein both the brake circuits (1, 2) of the first group and the brake circuits (3) of the second group have at least one hydraulic pump (15, 15a, 15b), wherein the hydraulic pumps are kinematically connected to a common pump drive (36), **characterized in that** in order to decouple the hydraulic pressure generation in the brake circuits (1, 2) of the first group from the hydraulic pressure generation in the hydraulic brake circuit (3) of the second group the hydraulic pumps (15, 15b) which are assigned to the brake circuits (1, 2) of the first group can be mechanically decoupled from the pump drive (36), in particular by a free-wheel clutch (38) which can be controlled by the rotational direction of the pump driveshaft.

4. Brake device according to Claim 1 or 3, **characterized in that** at least one of the wheels (5, 6) whose wheel brakes are connected to brake circuits (3) of the second group is additionally connected to an operative assembly (20) which brings about a deceleration of the respective wheel.

5. Brake device according to Claim 4, **characterized in that** the operative assembly (20) is an electric generator.

6. Brake device according to Claim 5, **characterized in that** the generator is an electric drive motor of the motor vehicle which is operated as a generator.

7. Brake device according to Claim 5 or 6, **characterized in that** the generator is connected to a battery (25).

8. Brake device according to Claim 5, 6 or 7, **characterized in that** the generator can be connected to an electric load (28) .

9. Brake device according to Claim 1 or one of the following claims,
**characterized in that** the control device (22) is connected to at least one sensor of the following types of sensor:
lateral acceleration sensor (29),
slip sensor (30),
velocity sensor (31),
direction of travel sensor,
steering request sensor.

10. Brake device according to Claim 5 or one of the following claims,
**characterized in that** the control device (22) is connected to at least one sensor of the following types of sensor:
battery charging sensor (24),
generator power sensor (23).

11. Brake device according to Claim 1 or one of the following claims,
**characterized in that** in each case a brake circuit of the first group is connected to a wheel brake of a front wheel of a motor vehicle.

12. Brake device according to Claim 1 or one of the following claims, **characterized in that** a brake circuit (3) of the second group is connected to both wheel brakes of two rear wheels (5, 6) of a motor vehicle.

13. Brake device according to Claim 12, **characterized in that** the brake circuit (3) of the second group acts on a rear axle (27) which is driven by an engine.

14. Brake device according to Claim 1 or one of the following claims,
**characterized in that** the control device (22) is connected to means (10, 10a, 11, 12, 13, 14) for influencing the distribution of a braking force between the brake circuits (1, 2) of the first group.

15. Brake device according to Claim 3, **characterized in that** the hydraulic pump (15a) of the hydraulic brake circuit (3) of the second group can generate hydraulic pressure independently of the rotational direction, and **in that** the hydraulic pump (15, 15a) of the brake circuit of the first group is driven in only one rotational direction.

16. Method for operating a brake device according to one of the preceding patent claims, in which the hydraulic brake circuits (1, 2) of the first group are acted on directly by means of a pressure force-generating device (7), the braking request is determined by means of a sensor (21), and the control device (22) actuates the brake circuits (3) of the second group while taking into account the acting deceleration of an operative assembly (20) for bringing about an aimed-at total braking effect.

## Revendications

1. Dispositif de freinage pour un véhicule automobile comprenant un premier groupe d'au moins deux circuits de freinage hydrauliques (1, 2) qui sont connectés à un dispositif de génération de pression de freinage (7) pouvant être actionné manuellement ou au moyen d'une pédale (8) et dont l'action sur des freins de roue peut être commandée par des soupapes (10, 10a, 11, 12, 13, 14) et comprenant un deuxième groupe de circuits de freinage avec au moins un circuit de freinage hydraulique (3) qui est désaccouplé hydrauliquement de manière permanente du dispositif de génération de pression de freinage (7) et qui est commandé exclusivement au moyen d'un dispositif de commande automatique (22),
les circuits de freinage (1, 2) du premier groupe et les circuits de freinage (3) du deuxième groupe présentant au moins une pompe hydraulique (15, 15a, 15b), les pompes hydrauliques étant connectées de manière cinématique à un entraînement de pompe commun (36),
**caractérisé en ce que** les pompes hydrauliques (15, 15b) associées aux circuits de freinage (1, 2) du premier groupe peuvent être connectées par le biais de soupapes (39) du côté de l'aspiration à la sortie haute pression respective en vue du désaccouplement de la génération de pression hydraulique dans les circuits de freinage (1, 2) du premier groupe de la génération de pression hydraulique dans le circuit de freinage hydraulique (3) du deuxième groupe,
les pompes hydrauliques (15, 15b) associées au premier groupe se trouvant en marche à vide.

2. Dispositif de freinage selon la revendication 1, **caractérisé en ce que** les pompes hydrauliques des circuits de freinage du premier groupe (1, 2) peuvent être connectées par le biais de clapets anti-retour sollicités par ressort (40) au côté haute pression du circuit de freinage respectif.

3. Dispositif de freinage pour un véhicule automobile comprenant un premier groupe d'au moins deux circuits de freinage hydrauliques (1, 2) qui sont connectés à un dispositif de génération de pression de freinage (7) pouvant être actionné manuellement ou au moyen d'une pédale (8) et dont l'action sur des freins de roue peut être commandée par des soupapes (10, 10a, 11, 12, 13, 14) et comprenant un deuxième groupe de circuits de freinage avec au moins un circuit de freinage hydraulique (3) qui est désaccouplé hydrauliquement de manière permanente du dispositif de génération de pression de freinage (7) et qui est commandé exclusivement au moyen d'un dispositif de commande automatique (22), les circuits de freinage (1, 2) du premier groupe ainsi que les circuits de freinage (3) du deuxième groupe présentant au moins une pompe hydraulique (15, 15a, 15b), les pompes hydrauliques étant connectées de manière cinématique à un entraînement de pompe commun (36),
**caractérisé en ce que** les pompes hydrauliques (15, 15b) associées aux circuits de freinage (1, 2) du premier groupe peuvent être désaccouplées mécaniquement de l'entraînement de pompe (36) pour le désaccouplement de la génération de pression hydraulique dans les circuits de freinage (1, 2) du premier groupe de la génération de pression hydraulique dans le circuit de freinage hydraulique (3) du deuxième groupe, en particulier par un accouplement de roue libre (38) pouvant être commandé par le sens de rotation de l'arbre d'entraînement des pompes.

4. Dispositif de freinage selon la revendication 1 ou 3, **caractérisé en ce qu'**au moins l'une des roues (5, 6) dont les freins de roue sont connectés à des circuits de freinage (3) du deuxième groupe est en outre connectée à une unité fonctionnelle (20) qui provoque un ralentissement de la roue respective.

5. Dispositif de freinage selon la revendication 4, **caractérisé en ce que** l'unité fonctionnelle (20) est un générateur électrique.

6. Dispositif de freinage selon la revendication 5, **caractérisé en ce que** le générateur est un moteur d'entraînement électrique du véhicule automobile, fonctionnant en tant que générateur.

7. Dispositif de freinage selon la revendication 5 ou 6, **caractérisé en ce que** le générateur est connecté à une batterie (25).

8. Dispositif de freinage selon la revendication 5, 6 ou 7, **caractérisé en ce que** le générateur peut être connecté à un consommateur électrique (28).

9. Dispositif de freinage selon la revendication 1 ou selon l'une quelconque des autres revendications, **caractérisé en ce que** le dispositif de commande (22) est connecté à au moins un capteur parmi les types de capteurs suivants :
capteur d'accélération transversale (29),
capteur de patinage (30),
capteur de vitesse de conduite (31),
capteur de direction de conduite,
capteur de souhait de direction.

10. Dispositif de freinage selon la revendication 5 ou selon l'une quelconque des autres revendications, **caractérisé en ce que** le dispositif de commande (22) est connecté à au moins un capteur parmi les types de capteurs suivants :
capteur de charge de batterie (24),
capteur de puissance du générateur (23).

11. Dispositif de freinage selon la revendication 1 ou selon l'une quelconque des autres revendications, **caractérisé en ce qu'**un circuit de freinage respectif du premier groupe est connecté à un frein de roue d'une roue avant d'un véhicule automobile.

12. Dispositif de freinage selon la revendication 1 ou selon l'une quelconque des autres revendications, **caractérisé en ce qu'**un circuit de freinage (3) du deuxième groupe est connecté aux deux freins de roue de deux roues arrière (5, 6) d'un véhicule automobile.

13. Dispositif de freinage selon la revendication 12, **caractérisé en ce que** le circuit de freinage (3) du deuxième groupe agit sur un essieu arrière (27) qui est entraîné par un moteur.

14. Dispositif de freinage selon la revendication 1 ou selon l'une quelconque des autres revendications, **caractérisé en ce que** le dispositif de commande (22) est connecté à des moyens (10, 10a, 11, 12, 13, 14) pour influencer le réglage de la force de freinage appliquée aux circuits de freinage (1, 2) du premier groupe.

15. Dispositif de freinage selon la revendication 3, **caractérisé en ce que** la pompe hydraulique (15a) du circuit de freinage hydraulique (3) du deuxième groupe peut produire une pression hydraulique indépendamment du sens de rotation et **en ce que** la pompe hydraulique (15, 15a) du circuit de freinage du premier groupe est entraînée seulement dans un sens de rotation.

16. Procédé pour faire fonctionner un dispositif de freinage selon l'une quelconque des revendications précédentes, dans lequel les circuits de freinage hydrauliques (1, 2) du premier groupe sont sollicités directement au moyen d'un dispositif de génération de force de freinage (7), le souhait de freinage est détecté au moyen d'un capteur (21) et le dispositif de commande (22) commande les circuits de freinage (3) du deuxième groupe en tenant compte du ralentissement effectif d'une unité fonctionnelle (20) pour produire un effet de freinage total souhaité.
